# EUROPEAN PATENT APPLICATION

(11) **EP 1 376 375 A2**
(43) Date of publication of application: **02.01.2004**
(21) Application number: 03012512.4
(22) Date of filing: 02.06.2003
(51) Int. Cl.: G06F 13/40

(54) **Computer system and method of communicating**

(30) Priority: 28.06.2002 US 184574
(71) Applicant: MOTOROLA, INC., Schaumburg, IL 60196 (US)
(72) Inventor: Harris, Jeffrey M., Chandler, AZ 85224 (US); Tufford, Robert, Chandler, AZ 85226 (US)
(74) Representative: Gibson, Sarah Jane

(57) **Abstract**

A computer system (100) includes a base board (102) and an expansion card (104), where the expansion card (104) interfaces with the base board (102) using a switched fabric network standard (106). A method of communicating in a computer system (100) includes providing a base board (102) having a connector interface (110) and an expansion card (104) having a connector (108) and a module (112), where the connector (108) is designed to be received by the connector interface (110). The method also includes coupling the expansion card (104) to the base board (102) via the connector (108) and the connector interface (110) and having the module (112) communicating with the computer system (100) through the connector (108) and the connector interface (110) using a switched fabric network standard (106).

## Description

### Background of the Invention

Expansion cards can be added to computer systems to lend additional functionality or augment capabilities. Current expansion cards interface and communicate with computer systems using primarily a multi-drop parallel bus network architecture, such as Peripheral Component Interconnect (PCI) or VERSAmodule Eurocard (VMEbus). A multi-drop parallel bus architecture has the disadvantage that it can only be used to support one simultaneous communication between modules in a computer system or network. However, some applications have requirements for simultaneous high bandwidth transfers between modules that cannot be handled by the multi-drop parallel bus architecture. It is desirable to configure current expansion cards to accommodate high-speed data transfers while maintaining existing expansion card form factors and interfacing means with computer systems.

Accordingly, there is a significant need for an apparatus and method that overcomes the deficiencies of the prior art outlined above.

### Brief Description of the Drawings

Referring to the drawing:
FIG.1 depicts a computer system according to one embodiment of the invention; and
FIG.2 depicts a computer system according to another embodiment of the invention.

It will be appreciated that for simplicity and clarity of illustration, elements shown in the drawing have not necessarily been drawn to scale. For example, the dimensions of some of the elements are exaggerated relative to each other. Further, where considered appropriate, reference numerals have been repeated among the Figures to indicate corresponding elements.

### Description of the Preferred Embodiments

In the following detailed description of exemplary embodiments of the invention, reference is made to the accompanying drawings, which illustrate specific exemplary embodiments in which the invention may be practiced. These embodiments are described in sufficient detail to enable those skilled in the art to practice the invention, but other embodiments may be utilized and logical, mechanical, electrical and other changes may be made without departing from the scope of the present invention. The following detailed description is, therefore, not to be taken in a limiting sense, and the scope of the present invention is defined only by the appended claims.

In the following description, numerous specific details are set forth to provide a thorough understanding of the invention. However, it is understood that the invention may be practiced without these specific details. In other instances, well-known circuits, structures and techniques have not been shown in detail in order not to obscure the invention.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact. However, "coupled" may mean that two or more elements are not in direct contact with each other, but yet still co-operate or interact with each other.

For clarity of explanation, the embodiments of the present invention are presented, in part, as comprising individual functional blocks. The functions represented by these blocks may be provided through the use of either shared or dedicated hardware, including, but not limited to, hardware capable of executing software. The present invention is not limited to implementation by any particular set of elements, and the description herein is merely representational of one embodiment.

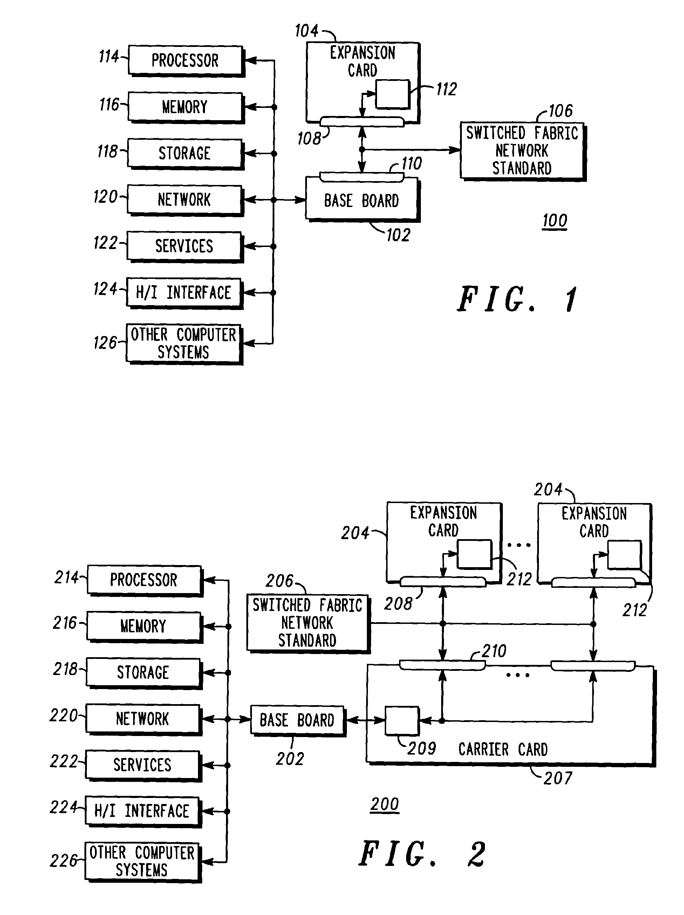

FIG.1 depicts a computer system 100 according to one embodiment of the invention. As shown in FIG.1, computer system 100 can include a base board 102 that can include or be coupled to one or more components of computer system 100 including processor 114 for processing algorithms stored in memory 116. Memory 116 comprises control algorithms, and can include, but is not limited to, random access memory (RAM), read only memory (ROM), flash memory, electrically erasable programmable ROM (EEPROM), and the like. Memory 116 can contain stored instructions, tables, data, and the like, to be utilized by processor 114. Computer system 100 can also include storage 118, which can include, for example, hard drive, flash memory, floppy disks and disk drives, CD-ROM, DVD, and the like.

Base board 102 can also be coupled to one or more networks 120 and services 122. Network 120 can include, for example and without limitation, VMEbus, Peripheral Component Interconnect (PCI and PCI-X), RapidIO™, Serial RapidIO™, PCI Express™, InfiniBand™, Hypertransport™, FibreChannel™, Ethernet™ networks, and the like. Services 122 can be an encapsulation of some functionality that is of use to one or more service-using entities (current or anticipated). A service can provide access to information or perform some computation. Services 122 also provide a desired functionality to a human user.

Computer system 100 can also include human interface (H/I) elements 124, which can include, without limitation, elements such as a display, a multi-position controller, one or more control knobs, one or more indicators such as bulbs or light emitting diodes (LEDs), one or more control buttons, one or more speakers, a microphone, and any other H/I elements 124 required by computer system 100. H/I elements 124 can request and display content and data including, application data, position data, personal data, email, audio/video, and the like. The invention is not limited by the (H/I) elements 124 described above. As those skilled in the art will appreciate, the (H/I) elements 124 outlined above are meant to be representative and to not reflect all possible (H/I) elements that may be employed.

Computer system 100 can also be coupled to other computer systems 126, which can include other servers, the Internet, databases, other services, and the like. Other computer systems 126 can be coupled directly to computer system 100 or via network 120.

Computer system 100 can also include one or more expansion cards 104, which are designed to interface with base board 102. In an embodiment of the invention, expansion card 104 interfaces with base board 102 using at least switched fabric network standard 106 generally known in the art. For example, switched fabric network standard 106 can include at least Serial RapidIO™, PCI Express™, InfiniBand™, Hypertransport™, FibreChannel™. Ethernet™ network standards. Ethernet can include variations, for example and without limitation, 10 Gbps Ethernet, 100 Gbps Ethernet, 10 Gbps Attachment Unit Interface (XAUI), and the like.

Expansion card 104 can include one or more modules 112 which add functionality to expansion card 104 and computer system 100. Modules can include, for example and without limitation, processors, memory, storage devices, I/O elements, and the like. Modules are coupled to connector 108, where connector 108 is designed to interface and interlock with connector interface 110 on base board 102.

In an embodiment of the invention, expansion card 104 can be a PCI expansion card having a PCI form factor. PCI form factor, including mechanical dimensions, electrical specifications, and the like, are known in the art and set forth in the PCI Local Bus Specification revision 2.3 or later as promulgated by the PCI Special Interest Group, 5300 N.E. Elam Young Parkway, Hillsboro, Oregon.

In another embodiment, expansion card 104 can be a mezzanine card. Although any type of mezzanine card is within the scope of the invention, an exemplary mezzanine card can be a Common Mezzanine Card (CMC) having a CMC form factor. CMC form factor, including mechanical dimensions, electrical specifications, and the like, are known in the art and set forth in the Institute of Electrical and Electronics Engineers (IEEE) standard P1386. A particular example of an embodiment is a PCI mezzanine card (PMC) having a PMC form factor. PMC form factor, including mechanical dimensions, electrical specifications, and the like, are known in the art and also set forth in the Institute of Electrical and Electronics Engineers (IEEE) standard P1386.

In still another embodiment, expansion card 104 can be a mini-PCI expansion card having a mini-PCI form factor. Mini-PCI cards and form factors are known in the art with mechanical, electrical and configuration standards set out in the Mini PCI Specification revision 1 or later and the PCI Local Bus Specification revision 2.3 or later as promulgated by the PCI Special Interest Group, 5300 N.E. Elam Young Parkway, Hillsboro, Oregon.

Base board 102 includes at least one connector interface 110, which is designed to receive expansion card 104 via connector 108. In an embodiment, expansion card 104 and base board 102 communicate through connector 108 and connector interface 110 using switched fabric network standard 106. Connector 108 and connector interface 110 can have one of a PCI, CMC, PMC and mini-PCI standard connector and connector interface form factor in conformance with the respective specifications listed above.

In an embodiment, although connector 108 and connector interface 110 can have the form factors listed above, the pin configuration in connector 108 and connector interface can be such that expansion card 104 and base board 102 communicate using switched fabric network standard 106. In another embodiment, the pin configuration of connector 108 and connector interface 110 can be such that expansion card 104 and base board 102 can communicate using more than one switched fabric network standard 106. In another embodiment, the pin configuration of connector 108 and connector interface 110 can be such that expansion card 104 and base board 102 communicate using switched fabric network standard 106 and another network standard, for example, a multi-drop parallel bus such as PCI, PCI-X, and the like. When expansion card 104 and base board 102 are coupled, module 112 on expansion card 104 can communicate with computer system 100 through connector 108 and connector interface 110 using at least one switched fabric network standard 106. In effect, module 112 adds functionality to computer system 100 and can communicate with computer system 100 through connector 108 and connector interface 110 using at least one switched fabric network standard 106.

In one embodiment base board 102 can be a standard computer motherboard in a conventional personal computer, which is known in the art. In another embodiment, base board 102 can be a VMEbus board having a VMEbus board form factor. VMEbus form factor, including mechanical dimensions, electrical specifications, and the like are known in the art and set forth in the ANSI/VITA 1-1994 and ANSI/VITA 1.1-1997 standards promulgated by the VMEbus International Trade Association (VITA), P.O. Box 19658, Fountain Hills, Arizona, 85269 (where ANSI stands for American National Standards Institute).

In still another embodiment, base board 102 can be a CompactPCI® board having a CompactPCI form factor. CompactPCI form factor, including mechanical dimensions, electrical specifications, and the like, are known in the art and set forth in the CompactPCI Specification, by PCI Industrial Computer Manufacturers Group (PCIMG™), 301 Edgewater Place, Suite 220, Wakefield, Massachusetts.

In yet another embodiment, base board 102 can be an Advanced Telecommunications Computer Architecture (ATCA™) board having an ATCA form factor. ATCA form factor, including mechanical dimensions, electrical specifications, and the like, are known in the art and set forth in the ATCA Specification, by PCI Industrial Computer Manufacturers Group (PICMG), 301 Edgewater Place, Suite 220, Wakefield, Massachusetts.

In still yet another embodiment, base board 102 can be an Advanced Packaging System (APS) board having an APS form factor. APS form factor, including mechanical dimensions, electrical specifications, and the like, are known in the art and set forth in the ANSI/VITA Specification 34.

FIG.2 depicts a computer system 200 according to another embodiment of the invention. As shown in FIG.2, computer system 200 is analogous to computer system 100 depicted in FIG. 1. Computer system 200 includes a carrier card 207 designed to interface with and be coupled to one or more expansion cards 204. Carrier card includes connector interface 210 designed to interface with connector 208 on expansion card 204. Connector 208 and connector interface 210 can have one of a PCI, CMC, PMC and mini-PCI standard connector and connector interface form factor in conformance with the respective specifications listed above.

In effect, carrier card 207 can be coupled to one or more expansion cards 204 and thereby incorporate the functionality of one or more expansion cards 204 into computer system 200. Expansion card 204 and module 212 can communicate with base board 202 and computer system 200 via carrier card using at least one switched fabric network standard. Carrier card 207 can be coupled to and interface with base board 202 using any known connection method, for example, PCI, CMC, PMC, VMEbus, and the like.

In an embodiment, carrier card 207 can optionally include bridging module 209, which is coupled to connector interface 210 and to base board 202, when carrier card 207 is coupled to base board 202. Bridging module 209 can be hardware and/or software to provide an interface between expansion cards 204 and other elements of computer system 200, including base board 202, processor, memory, and the like. Bridging module 209 is known in the art and can facilitate communication between expansion cards 204 and computer system 200.

Bridging module 209 allows expansion card 204 to bridge across speed and load domains different from the one used by expansion card 204 in addition to network protocols different from the network protocol used by expansion card 204. The use of bridging modules 209 to bridge speed and load domains is known in the art.

While we have shown and described specific embodiments of the present invention, further modifications and improvements will occur to those skilled in the art. It is therefore, to be understood that appended claims are intended to cover all such modifications and changes as fall within the true spirit and scope of the invention.

## Claims

1. A computer system (100), **characterized by**:
a base board (102); and
an expansion card (104), wherein the expansion card interfaces with the base board using a switched fabric network standard (106).

2. The computer system of claim 1, wherein the base board is one of a VMEbus board, CompactPCI board, ATCA board, APS board and motherboard.

3. The computer system of claim 1, wherein the expansion card has one of a PCI, CMC, PMC and mini-PCI form factor.

4. The computer system of claim 1, wherein the switched fabric network standard is at least one of InfiniBand, Serial RapidIO, FibreChannel, Ethernet, PCI Express and Hypertransport switched fabric network standards.

5. The computer system of claim 1, further comprising a carrier card, wherein the expansion card is coupled to the carrier card, wherein the carrier card interfaces with the base board, and wherein the expansion card communicates with the base board via the carrier card.

6. The computer system of claim 1, wherein the expansion card comprises a connector and the base board comprises a connector interface designed to receive the connector, and wherein the connector and connector interface have one of a PCI, CMC, PMC and min-PCI connector and connector interface form factor.

7. A method of communicating in a computer system (100), **characterized by**:
providing a base board (102) having a connector interface (110);
providing an expansion card (104) having a connector (108) and a module (112), wherein the connector is designed to be received by the connector interface;
coupling the expansion card to the base board via the connector and the connector interface; and
the module communicating with the computer system through the connector and the connector interface using a switched fabric network standard (106).

8. The method of claim 7, wherein the base board is one of a VMEbus board, CompactPCI board, ATCA board, APS board and motherboard.

9. The method of claim 7, wherein the expansion card has one of a PCI, CMC, PMC and mini-PCI form factor.

10. The method of claim 7, wherein the switched fabric network standard is at least one of InfiniBand, Serial RapidIO, FibreChannel, Ethernet, PCI Express and Hypertransport switched fabric network standards.
